(19) Europäisches Patentamt
European Patent Office
Office européen des brevets

(11) **EP 1 681 312 B1**

(12) **EUROPEAN PATENT SPECIFICATION**

(45) Date of publication and mention of the grant of the patent:
**23.03.2011 Bulletin 2011/12**

(21) Application number: **04792975.7**

(22) Date of filing: **20.10.2004**

(51) Int Cl.:
***B29C 61/00*** *(2006.01)* ***C08J 5/18*** *(2006.01)*
***C08L 67/00*** *(2006.01)* ***B29C 61/02*** *(2006.01)*
***B29C 61/06*** *(2006.01)*

(86) International application number:
**PCT/JP2004/015859**

(87) International publication number:
**WO 2005/037899 (28.04.2005 Gazette 2005/17)**

(54) **HEAT-SHRINKABLE POLYESTER FILM AND HEAT-SHRINKABLE POLYESTER FILM ROLL**

WÄRMESCHRUMPFBARE POLYESTERFOLIE UND ROLLE VON WÄRMESCHRUMPFBARER POLYESTERFOLIE

FILM THERMO-RETRECISSABLE A BASE DE POLYESTER ET PRESENTATION EN ROULEAU

(84) Designated Contracting States:
**AT BE BG CH CY CZ DE DK EE ES FI FR GB GR HU IE IT LI LU MC NL PL PT RO SE SI SK TR**

(30) Priority: **21.10.2003 JP 2003361084**
**22.10.2003 JP 2003362192**
**24.10.2003 JP 2003364532**

(43) Date of publication of application:
**19.07.2006 Bulletin 2006/29**

(73) Proprietor: **Toyo Boseki Kabushiki Kaisha**
**Osaka-shi,**
**Osaka 530-8230 (JP)**

(72) Inventors:
- **ITO, Hideki,**
  **c/o Toyo Boseki Kabushiki Kaisha**
  **Inuyama-shi, Aichi 484-8508 (JP)**
- **TABOTA, Norimi,**
  **c/o Toyo Boseki Kabushiki Kaisha**
  **Inuyama-shi, Aichi 484-8508 (JP)**
- **ODA, Hisanobu,**
  **c/o Toyo Boseki Kabushiki Kaisha**
  **Inuyama-shi, Aichi 484-8508 (JP)**

(74) Representative: **von Kreisler Selting Werner**
**Deichmannhaus am Dom**
**Bahnhofsvorplatz 1**
**50667 Köln (DE)**

(56) References cited:
**EP-A- 1 149 685** **EP-A- 1 340 609**
**WO-A1-02/087853** **WO-A1-03/091004**
**JP-A- 2002 331 581** **JP-A- 2003 165 157**
**JP-A- 2004 058 383** **US-A- 3 388 651**

- **DATABASE WPI Week 200357 Thomson Scientific, London, GB; AN 2003-607962 XP002517782 & WO 03/055937 A (TOYO BOSEKI KK) 10 July 2003 (2003-07-10)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to heat-shrinkable polyester film suitable for label usage and to a film roll obtained by winding up a long heat-shrinkable polyester film. A heat-shrinkable polyester film of the present invention has outstanding heat shrinkage properties. In addition, a heat-shrinkable polyester film wound up into a film roll of the present invention gives a fewer incidence of defective products in production processes of products such as labels, bags etc., and also a distinctly fewer incidence of defects such as insufficient shrinkage, shrinkage shading, whitening, crinkling, deformation, uneven shrinkage in the direction orthogonal to the maximum shrinkage direction in the heat shrinking process.

BACKGROUND ART

Conventionally, heat-shrinkable polyester films (hereinafter, occasionally referred to only as a film) have been widely used as shrink (accumulative) packaging products, shrink labels, cap seals, etc., for a variety of containers such as polyethyleneterephthalate (PET) containers, polyethylene containers, glass containers, utilizing heat shrinkable property thereof.

Especially, in these days, use of colored PET bottle is being limited from a viewpoint of recycling, and therefore increasing are demands of covering of most of a bottle side surface with a label of a heat-shrinkable polyester film instead of coloring of the bottle itself, (what is called full label usage). Whereas, since PET bottles have various side face shapes and outside diameter variation at an arbitrary height, a different level of shrinkage according to a height of the bottle is needed even for a label for covering one bottle. Therefore, needed is a heat-shrinkable polyester film having more excellent shrinkage characteristics than those in conventional articles, and exhibiting outstanding quality after shrink-finishing also in uses for covering of bottles with complicated side face shapes.

Furthermore, increasing is a case where wrapping and shrinking of labels of PET bottles for drinks are performed in a beverage charging line for productivity improvement. In such a charging line, since operations are performed at high speeds, high-speed wrapping and shrinking of labels tend to require shrinking to be performed in a short time. Accordingly, there are needed physical properties withstanding higher-speed wrapping, and shrinking performance giving a higher shrinkage percentage in a shorter time in heat-shrinkable polyester films.

In addition, in these days, the labels used for various containers such as PET bottles are also expected to have a function for reinforcing these containers. However, labels obtained from conventional heat-shrinkable polyester films did not have satisfactory reinforcing function.

In addition, since containers having labels covered and shrunk are often packed in a sate of high temperature (boxing etc.), especially in the case of full label, there occurs a problem of adhesion (blocking) of labels to each other between packed containers.

Furthermore, from a viewpoint of productivity improvement in a film-formation process or a post processing process, for heat-shrinkable films needed are a higher speed transferring of long films, and production of film rolls by winding at a higher speed, and as result also needed is excellent slip property to some extent for corresponding to the production process. In some cases, insufficient slip property of the film possibly generate defects of handling in transferring and winding at higher speeds. In detail, for example, in areas where film contacts guide roll at the time of film transferring, a tension of the film made to increase may form abrasion marks on a film surface, and in some cases may form a defect of crinkling or pimple shaped defect (minute proj ection formed with air caught between films) of a film wound in roll.

Furthermore, in these days, the label is also utilized for the purpose of avoiding change in quality and coloring of contents (beverages etc.) charged in the container with ultraviolet radiation entering from container outside. Conventionally, ultraviolet radiation cut type shrink films made of polyvinyl chloride were generally used, but demands on films constituted of materials other than polyvinyl chloride is increasing according to the above-described reasons. Ultraviolet radiation cut property demanded concretely may vary according to content. For example, in the case of contents of foodstuffs or beverages, since ultraviolet radiation with long wavelength of 360 to 400 nm may cause change in quality, coloring, etc. of the contents of foodstuffs or beverages, property allowing cut of ultraviolet radiation in such a wavelength band is desirable. However, there could not be found labels enabling cut of the ultraviolet radiation in such a longer wavelength region in conventional labels made of polyesters.

In production of labels etc., following methods are usually adopted. That is, raw material polyester is continuously extruded in a molten state. An undrawn film is manufactured. Subsequently, the undrawn film is drawn and wound to give a heat-shrinkable polyester film roll. The film in the roll is then unwound and slit into a film with a desired width, the slit film being rewound into another roll. Subsequently, various information and figures such as product name etc. are printed on the resulting film. After printing, the film is folded and bonded along both edges by means of, for example, solvent adhesion, to give a tubular film (in tubing process). Meanwhile, there may be cases where the printing and the

slitting processes are performed in a reversed sequence. The tubular film thus obtained may be cut into tubular labels with a desired length, being further converted into bags by bonding along an edge of openings thereof.

Subsequently, containers wrapped in the labels or the bags above are passed, for example on a belt conveyer, through a shrinking tunnel (a steam tunnel) wherein heated steam is blown in for heat shrinking or a hot-air tunnel wherein hot air is blown in, to give final products (labeled containers) having the labels or the bags tightly attached thereon.

When each of labels, bags, etc. have a large variation of heat shrinkage percentage among them in this heat shrinking process, there may occasionally be produced defective labels and bags failing to give proper heat shrinkage percentage, since the tunnel is controlled in a same heating conditions during the production. As a result, large variation in the heat shrinkage properties leads to products inferior in appearance caused by insufficient shrinkage, shrinkage shading, crinkling, deformation in printed drawings, uneven shrinkage in a direction orthogonal to a maximum shrinkage direction, etc., and the product can not be shipped to market. Usually, labels or bags for a specific product are produced from a single film roll, and thus large variation in heat shrinkage properties of a film in a film roll leads to a higher defective fraction in the heat shrinkage process.

DATABASE WPI Week 200357 Thomson Scientific, London, GB; AN 2003-607962 XP002517782 & WO-A-03/055937; EP-A-1 149 685; EP-A-1 340 609; US-A-3 388 651; JP-A-2002-331581; JP-A-2003-165157; WO-A-02/087853; WO-A-03/091004; and JP-A-2004-058383 individually disclose heat-shrinkable polyester films that are made by film stretching operations and that are characterized by a shrinkability.

The present invention is completed in the light of the above-mentioned circumstances. An object of the present invention is to provide a heat-shrinkable polyester film having excellent blocking resistance, outstanding film-formation property, and processability, on the premise of a film giving excellent quality after shrink-finishing, and having function allowing reinforcing a container wrapped by film.

DISCLOSURE OF THE INVENTION

The present invention relates to

1. A heat-shrinkable polyester film satisfying following requirements (A) to (E):

(A) a heat shrinkage percentage in a maximum shrinkage direction of a sample is 10% to 50%, wherein, the sample is prepared and treated under following conditions:

a heat-shrinkable polyester film is cut into a shape of a square measuring 10 cm × 10 cm;
the sample obtained is immersed in hot water at 70°C for 5 seconds and then withdrawn from the hot water, and subsequently is immersed in water at 25°C for 10 seconds, and then withdrawn from the water;

(B) a heat shrinkage percentage of a sample in a maximum shrinkage direction is not less than 75%, and a heat shrinkage percentage in a direction orthogonal to the maximum shrinkage direction is not more than 10%, wherein, the sample is prepared and treated under following conditions:

a heat-shrinkable polyester film is cut into a shape of a square measuring 10 cm × 10 cm;
the sample obtained is immersed in hot water at 85°C for 5 seconds and then withdrawn from the hot water, and subsequently is immersed in water at 25°C for 10 seconds, and then withdrawn from the water;

(C) a heat shrinkage percentage difference of a sample ΔX (%) represented by a following equation is 10% to 20%,

$$\Delta X = X_0 - X_{10}$$

wherein, $X_0$ and $X_{10}$ are defined as follows;
$X_0$: a heat shrinkage percentage in a maximum shrinkage direction of a sample obtained by cutting a heat-shrinkable polyester film into a shape of a square measuring 10 cm × 10 cm;
$X_{10}$: a heat shrinkage percentage in a maximum shrinkage direction of a film obtained by cutting a heat-shrinkable polyester film having experienced heat shrink by 10% in a maximum shrinkage direction; and
wherein, the sample obtained is immersed in hot water at 95°C for 5 seconds and then withdrawn from the hot water, and subsequently is immersed
in water at 25°C for 10 seconds, and then withdrawn from the water;

(D) a three-dimensional surface roughness SΔa is 0.008 to 0.04;
(E) a three-dimensional surface roughness SRz is 0.6 to 1.5 μm, obtainable by

- a first stage of drawing at a drawing ratio between 4.4 times and 6.0 times with respect to the undrawn film, and at a drawing temperature within the range of Tg -5 ˚C to Tg +15 ˚C;
- heat setting of the film in a state of tension in the drawing direction at a tensioning ratio of not less than 1 % and not more than 6 % with respect to the film after the first stage of drawing, and at a temperature which is the same as in the first stage of drawing or 1 to 5 ˚C lower than the first stage drawing within the temperature range, for not less than 0.5 seconds and not more than 5 seconds;
- a second stage of drawing at a drawing ratio of not less than 1.1 times and not more than 1.5 times with respect to the film after heat setting at a temperature which is the same as the heat setting temperature or 1 to 5 ˚C lower than the heat setting temperature within the temperature range; and
- cooling the film.

2. The heat-shrinkable polyester film according to item 1, wherein the polyester comprises ethylene terephthalate units.

3. The heat-shrinkable polyester film according to item 2, wherein the polyester additionally comprises a polyhydric alcohol unit selected from propylene glycol, 1,4-butanediol, 1,6-hexanediol, neopentylglycol, 1,4-cyclohexane dimethanol, and combinations thereof.

4. The heat-shrinkable polyester film according to item 2, wherein the polyester comprises not less than 50 mole % of ethylene terephthalate units in constitutional units 100 mole % of the heat-shrinkable polyester film.

5. The heat-shrinkable polyester film according to any one of items 1 to 4, having a maximum of heat-shrinkage stress of not less than 7 MPa, as measured according to the specification.

BEST MODE FOR CARRYING OUT OF THE INVENTION

A heat-shrinkable polyester film of the present invention is obtained using single copolymerized polyester having an ester unit formed of publicly known polybasic carboxylic acid components and polyhydric alcohol components as a principal constitutional unit, and a mixture of 2 or more polyesters.

Requirements (A) and (B)

A heat shrinkage- percentage of the heat-shrinkable polyester film of the present invention, measured under conditions of the above (A) and (B) is a value of (A) : not less than 10% and not more 50%, and (B) : not less than 75% in a maximum shrinkage direction, and not more than 10% in a direction orthogonal to the maximum shrinkage direction. Such a film may provide a heat-shrinkable label giving a high shrinkage percentage by a comparatively short-time treatment.

Generally, in wrapping and shrinking process of a label manufactured by a heat-shrinkable film onto a container etc., the above-described hot air tunnel uses conditions of about a temperature of 120 to 200˚C, a wind velocity of 2 to 20 m/second, and a period of time of about 2 to 20 seconds, and a steam tunnel uses conditions of a temperature of 75 to 95˚C, a pressure of about 0. 5 to 20 MPa, and a period of time of about 2 to 20 seconds. A film satisfying the range for all the heat shrinkage percentages of (A) and (B), for example, may fulfill extremely beautiful shrinking finish visual appearance under usually performed shrinking conditions even in use as a heat-shrinkable label for covering a great portion of a side surface for containers, such as PET bottle, having a complicated side face shape, and in use as a heat-shrinkable label for containers having side face shape requiring partially a very high shrinkage percentage with respect to a label for covering the side surface (for example, uses for a full label usage for PET bottles, a full label usage for glass bottles, etc.)

That is, on one hand, when a heat shrinkage percentage measured under the condition of (A) is less than the above-mentioned range, an insufficient low-temperature shrinkable will be given, leading to disadvantageous necessity of giving a higher temperature at the time of label covering shrinking. On the other hand, when a heat shrinkage percentage measured under the condition of (A) exceeds the above-mentioned range, there may be a tendency of occurrence of some defects, such as jumping (an upward shift of the label caused by rapid shrink of the film) of a label when the label is made to shrink and wrap a PET bottle etc. The heat shrinkage percentage measured under a condition of (A) is preferably not less than 15% and not more than 40%.

In addition, when a heat shrinkage percentage in a maximum shrinkage direction measured under the condition

of (B) is less than the range, for example, in a label wrapping and shrinking on a PET bottle etc., the label is apt to give insufficient shrinkage in portions (for example, inlet portion of the bottle etc.) needing a larger shrinkage percentage. The heat shrinkage percentage measured under the condition of (B) is preferably not less than 78% and not more than 95%.

Furthermore, visual defects caused by uneven shrinkage in a direction orthogonal to a maximum direction occurs, when a heat shrinkage percentage in the direction orthogonal to the maximum shrinkage direction (heat shrinkage percentage in the orthogonal direction) measured under the condition of (B) exceeds the above-mentioned range. Here, "uneven shrinkage" means that a length of the label after shrinkage is uneven, and leads to a defect in appearance. For example, an uneven label wrapped and shrunk around a PET bottle etc. has a top edge line of the label curved downward or a bottom edge line curved upward. A heat shrinkage percentage in the orthogonal direction measured under the condition of (B) is preferably not more than 7%.

Requirement (C)

In addition, a heat shrinkage percentage difference ΔX of the heat-shrinkable polyester film of the present invention represented with following equation (%) gives not less than 10% and not more than 20%.

$$\Delta X = X_0(\%) - X_{10}(\%)$$

Heat shrinkage percentages are defined in such a manner that a heat shrinkage percentage in a maximum shrinkage direction measured under the above-described condition (C) for a film before heat shrinking is defined as $X_0$ (%) ; a film before heat shrinking is once heat shrunk by 10% in a maximum shrinkage direction, and a heat shrinkage percentage of the obtained film in a maximum shrinkage direction measured under the above-described condition (C) is defined as $X_{10}$ (%).

A heat-shrinkable polyester film giving the above-described heat shrinkage percentage difference ΔX within an above-mentioned range can provide a heat-shrinkable label having reinforcing effect for a wrapped container.

A heat-shrinkable label obtained from a heat-shrinkable polyester film giving the heat shrinkage percentage difference ΔX less than the above-mentioned range provides insufficient reinforcing effect for a container after wrapping and shrinking. A preferable heat shrinkage percentage difference ΔX of the heat-shrinkable polyester film of the present invention is not more than 17%. By the way, since the heat shrinkage percentage $X_{10}$ is a value measured using a film experiencing heat shrinking of 10%, a lower limit of the heat shrinkage percentage difference ΔX is not less than 10%.

Incidentally, when usual heat-shrinkable polyester films are again heat shrunk after once experiencing heat shrinking by 10%, a final heat shrinkage percentage of the film (a total amount of 10% of a first heat shrinkage percentage, and a second heat shrinkage percentage) drops more greatly than a heat shrinkage percentage in case of having shrunk the film before heat shrinking completely under a same heat shrinking condition (that is, the heat shrinkage percentage difference Δ will exceed the above-mentioned range). The film of the present invention uses a preferable composition of polyesters used for the film as described later, and at the same time needs control of drawing conditions of the film to secure a heat shrinkage percentage difference ΔX in the above-mentioned range.

The "heat shrinkage percentage in a maximum shrinkage direction" described above represents a heat shrinkage percentage in a direction giving a greatest shrinking of a sample, and the maximum shrinkage direction and the orthogonal direction are determined by a length in a lengthwise direction or horizontal direction of a square. A value of a heat shrinkage percentage (%) is determined according to a following equation.

$$\text{Heat shrinkage percentage} = 100 \times (\text{length before shrinking} - \text{length after shrinking}) / (\text{length before shrinking})$$

Preparation and treatment of a sample are performed by following methods. That is, samples measuring 10 cm × 10 cm are immersed for 5 seconds, and are heat shrunk in a no-load state under following conditions, respectively, and treated in such a manner that condition (A): in hot water at 70°C± 0.5°C; condition (B): in hot water at 85°C ± 0.5°C; and condition (C) ; in hot water at 95°C ± 0. 5°C for a heat shrinkage percentage $X_0$, subsequently the samples are immediately immersed in water at 25°C ± 0.5°C for 10 seconds in a no-load state, and then, lengths in a lengthwise direction and horizontal direction of a square are measured.

The heat shrinkage percentage $X_{10}$ used for calculation of the heat shrinkage percentage difference $\Delta X$ is measured in a following manner. First, a film beforehand experienced 10% of heat shrink in a maximum shrinkage direction is manufactured. A gripping device having two mutually facing chucks is prepared for gripping only a pair of mutually facing edges of a rectangular film. A heat-shrinkable polyester film is cut into a square or a rectangle in parallel with respect to a maximum shrinkage direction. The film after cut is fixed with the gripping device. Both ends orthogonal to the maximum shrinkage direction of the film are gripped by the chucks, and the film is fixed in such a way that the film may have a slack to give a ratio of a film length between chucks to a distance between chucks of gripping device of 1 : 0.9. Subsequently, the film fixed to the device is immersed in hot water at 95°C $\pm$ 0.5°C in a no-load state, for 5 seconds, and is heat shrink, and the film is immediately immersed in water at 25°C$\pm$0.5°C for 10 seconds in a no-load state, and then withdrawn out from the water. This film is removed from the chucks, and water is removed to obtain a film having experienced 10% of heat shrink in a maximum shrinkage direction.

A sample measuring 10 cm $\times$ 10 cm is cut out from the obtained film, a heat shrinkage percentage $X_{10}$ is measured using this sample by a same method as that used for the heat shrinkage percentage $X_0$. A heat shrinkage percentage difference $\Delta X$ is calculated by a following equation.

$$\Delta X = X_0 - X_{10}$$

In addition, both of a period of time between a manufacturing process of the film having experienced 10% of heat shrink in a maximum shrinkage direction, and a sample cutting process, and a period of time between a sample cutting process and a heat shrink process under conditions of (C) are preferably as short as possible. When a film having experienced 10% of heat shrink in a maximum shrinkage direction is preserved until the sample cutting process, and when the cut sample is preserved until the heat shrink process, the sample is to be preserved in a state of unstrained and under environment of air and at a temperature not more than 25°C to suppress unnecessary heat shrink.

Requirement (D)

In order to achieve the first object, a three-dimensional surface roughness S$\Delta$a of a heat-shrinkable polyester film gives a value of preferably not less than 0.008 and not more than 0.04. (Requirement (D)). Control of S$\Delta$a within the range enables securing excellent film-formation property and processability. The three-dimensional surface roughness S$\Delta$a may be measured with a three-dimensional roughness gauge (for example, product of Kosaka Seisakusho "ET-30K"). The three-dimensional surface roughness S$\Delta$a means a three-dimensional average inclination, and is measured in such a manner that at each of 150 points set in arbitrary directions of a film at intervals of 2$\mu$m by a plane view, an average inclination $\Delta$a defined by a following equation is measured in a direction orthogonal the directions, obtaining an average of measured results in these all points. For example, the above-mentioned 150 points are set in TD direction (an orthogonal direction to a running direction in film production) of a film, and an average inclination $\Delta$a is measured in MD direction (a running direction in film production) of the film.

$$\Delta a = \frac{1}{L}\int_0^L \left| \frac{d}{dx} f(x) \right| dx$$

[where, f(x) represents a profile curve, and in detail, it represents a size of unevenness at coordinate $\times$ set in a measurement direction (the value is positive in case of being higher than a mean line, and negative in case of lower than the mean line), and L represents a measurement length.]

On one hand, an excessively small S$\Delta$a will reduce transferring property in film production, provide a possibility of giving scratches to a film surface in transferring. On the other hand, an excessively large S$\Delta$a will deteriorate tear resistance of the film, and generate a white powder in film transferring, resulting in printing omission. A lower limit of the S$\Delta$a is more preferably 0.01, and still more preferably 0.012. In addition, an upper limit of the S$\Delta$A is more preferably 0.035, and still more preferably 0.03.

Requirement (E)

In addition, in order to achieve the first object, a three-dimensional surface roughness SRz of the heat-shrinkable

polyester film of the present invention is preferably not less than 0.6μm, and not more than 1.5 μm. Control of the SRz within the range can improve blocking resistance after container wrapping. The three-dimensional surface roughness SRz may be measured in a same manner as in the SΔa with a three-dimensional roughness gauge (for example, product of Kosaka Seisakusho "ET-30K").

The three-dimensional surface roughness SRz means three-dimensional ten point height of irregularities, and when 150 points are set in arbitrary direction of a film at intervals of 2μm by a plane view, the value is obtained in such a manner that a ten point height of irregularity Rz is measured in a direction orthogonal to the arbitrary direction at each of 150 points, obtaining an average of measured results in these all points. For example, the above-mentioned 150 points are set in TD direction (an orthogonal direction to a running direction in film production) of a film, and a ten point height of irregularities Rz is measured in MD direction (a running direction in film production) of the film.

On one hand, an excessively small SRz easily gives blocking, for example, when full labels are produced from a film and containers are wrapped by shrinking and the wrapped containers are packed (boxing etc.) in a hot state etc. On the other hand, an excessively large SRz will deteriorate tear resistance of the film, and generate a white powder in film transferring, resulting in printing omission. A lower limit of SRz is more preferably 0.65μm, and still more preferably 0.7μm. In addition, an upper limit of SRz is more preferably 1.3μm, and still more preferably 1.0μm.

Lubricants

Inclusion of lubricants in a film of the present invention will control SΔa and SRz in the above-mentioned range.

The lubricants include inorganic particles (inorganic lubricants), organic salt particles, polymer particles, etc. The inorganic particles include carbonates (carbonates of alkaline earth metal, such as calcium carbonate, magnesium carbonate, and barium carbonate etc.), sulfates (sulfates of alkaline earth metal, such as barium sulfate etc.), phosphates (phosphates of alkali metal, such as lithium phosphate, phosphates of alkaline earth metal, such as calcium phosphate and magnesium phosphate etc.), oxide particles (aluminum oxide, silicon oxide, titanium oxide, zirconium oxide, etc.), Kaolin, talc, lithium fluoride, etc. Silica (silicon oxides) particles are preferable among them. Especially preferable silica particle is aggregates formed of aggregation of primary particles. Such silica particles have excellent handling property, and are useful for obtaining a film with excellent transparency.

Organic salt particles include oxalates (oxalates of alkaline earth metal, such as calcium oxalate etc.), and terephthalates (alkaline earth metal salt, such as calcium salt, magnesium salt, and barium salt, zinc salt, manganese salt, etc.)

Polymer particles include homo polymers or copolymers of vinyl monomers, such as divinylbenzene, styrene, and (meth) acrylic acid, polytetrafluoroethylenes, benzoguanamine resins, thermosetting urea resins, thermosetting phenolic resins, etc. Especially crosslinked polymer particles are preferable.

A mean particle diameter of these lubricants is preferably not less than 0.01μm, and not more than 4μm, and more preferably not less than 0.05μm, and not more than 3.5 μm. A mean particle diameter of the lubricants less than the above-mentioned range makes it difficult to give SΔa not less than the lower limit, and a mean particle diameter exceeding the above-mentioned range of the lubricants makes it difficult to give SRz not more than the upper limit. A mean particle diameter of the lubricants as used herein is a nominal value by lubricant manufacturers, and it is a mean particle diameter measured for particles after adjustment of particle diameter by means of pulverizing of aggregates of primary particles.

In addition, it is recommended that an amount of addition of the lubricants is controlled to give not less than 0. 02 mass%, and not more than 0.5 mass% in a whole amount of a film, and more preferably not less than 0.03 mass% and not more than 0.4 mass%. In case of the film having a plurality of layers, as described later, a content of lubricants to whole amount of the layer, for each layer, is adjusted for two-layers located on a top surface to give a value of not less than 0.02 mass% and not more than 0.5 mass%, and preferably not less than 0.03 mass% and not more than 0.4 mass%. An amount of addition of lubricants less than the above-mentioned range makes it difficult to give the SΔa not less than the lower limit, and an amount of addition exceeding the above-mentioned range of lubricants makes it difficult to give SΔa not more than the an upper limit.

A timing of addition of the lubricants is not especially limited, and addition in polymerization and addition to polyesters in an extruder is preferable.

Ultraviolet radiation cutting agent

Inclusion in a film of ultraviolet radiation cutting agents (low molecular weight ultraviolet radiation cutting agents, high molecular weight ultraviolet radiation cutting agents, inorganic ultraviolet radiation cutting agents, etc.), and further suitable selection of kinds, types of inclusion, etc. of the ultraviolet radiation cutting agents may allow coexistence of both of the ultraviolet radiation cutting property and natural light transmittance. The ultraviolet radiation cutting agents may be included in the film by extrusion molding (film-formation process) after kneading the agents into the molten

polyester (kneading method). In addition, the agents may be included into the film by, for example, an applying method or impregnation method, and the kneading method is more preferable. The kneading method may increase a thickness of ultraviolet radiation cut layers, and may improve the ultraviolet radiation cutting property of the film.

A content of ultraviolet radiation cutting agents in the polyester film may be appropriately selected according to kinds of ultraviolet radiation cutting agents, and for example, it is approximately 0.1 to 50 mass %, preferably approximately 0.3 to 40 mass %, and more preferably approximately 0.5 to 30 mass % . In use of lower molecular weight ultraviolet radiation cutting agents, an upper limit of the amount to be used may be smaller, for example, the upper limit may be approximately 10 mass %, and preferably approximately 5 mass %. Hereinafter, according to kinds of the ultraviolet radiation cutting agents, detailed descriptions will be given.

(1) Use of lower molecular weight ultraviolet radiation cutting agents

Lower molecular weight ultraviolet radiation cutting agents are organic ultraviolet radiation cutting agents enabling absorption of ultraviolet radiation, and since they have similar refractive indexes to visible light as refractive indexes to visible light of the polyester film, they do not have a possibility of reducing the transmissivity of natural light. However, since the lower molecular weight ultraviolet radiation cutting agents have lower heat-resisting property, and/or they have sublimability at higher temperatures, they may be in some cases unable to give sufficient ultraviolet radiation cutting property. For example, the lower molecular weight ultraviolet radiation cutting agent is often made to included in a film by methods of kneading into a molten polyester, and of film-formation by extrusion molding etc. (film-formation process). However, decomposition and sublimation of the lower molecule ultraviolet radiation cutting agent may be induced during kneading and extrusion molding steps, sometimes leading to drop of the ultraviolet radiation cutting property of the film, and to pollution of manufacturing facilities (casting rolls used in film-formation).

Therefore in the present invention, in use of lower molecular weight ultraviolet radiation cutting agents, a laminated film with a plurality of layers (for example, three or more layers, that is, three layers, four layers, five layers, etc.) is preferably formed, by a co-extruding method etc. , and the lower molecular weight ultraviolet radiation cutting agent is preferably made to be included in part or all layers (preferably in all layers) that do not form surface layers (hereinafter, referred to as an internal layer). Inclusion in the internal layer of the lower molecular weight ultraviolet radiation cutting agent may at least prevent sublimation of the ultraviolet radiation cutting agent, and can improve yield of the ultraviolet radiation cutting agent in the film-formation process, resulting in improvement in the ultraviolet radiation cutting property of the film, and in realization of prevention of pollution to the manufacturing facilities. In addition, the ultraviolet radiation cutting agent may or may not be made to be included in the surface layers.

As the lower molecular weight ultraviolet radiation cutting agent, for example, include compounds represented with following formula (1), such as, "Bonasorb 3901, " a ultraviolet radiation cutting agent, manufactured by Orient chemical Industries, Ltd. etc.; compounds represented with following formula (2), a benzotriazol ultraviolet radiation cutting agent "Tinuvin (registered trademark) 326" manufactured by [Ciba Specialty Chemicals etc.; compounds represented with following formula (3), such as "LA-31" manufactured by Asahi Denka Co., Ltd. etc.; benzophenone ultraviolet radiation cutting agents; cyanoacrylate ultraviolet radiation cutting agents; and phenyl salicylate ultraviolet radiation cutting agents etc.

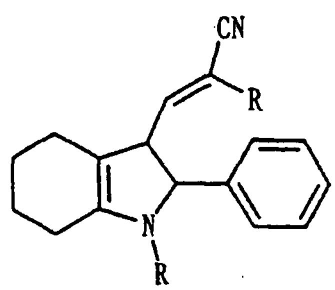

(1)

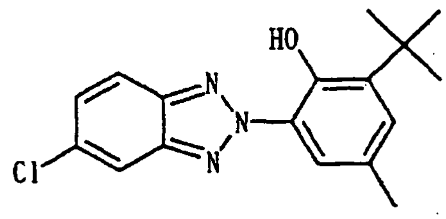

(2)

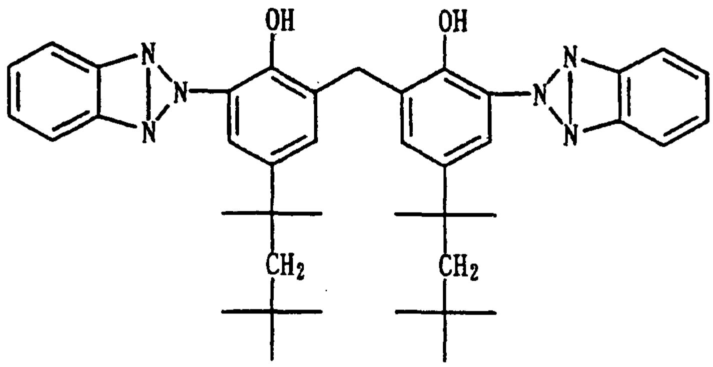

(3)

(where, R represents alkyl group.)

(2) Use of ultraviolet radiation cutting polymers

Like the lower molecular weight ultraviolet radiation cutting agents, higher molecular weight ultraviolet radiation cutting agents (ultraviolet radiation cutting polymers) are also organic ultraviolet radiation cutting agents that can absorb ultraviolet radiation, and since they have similar refractive indexes to visible light as that of the polyester film, there is no possibility of reducing natural light transmittance. In addition, unlike the lower molecular weight ultraviolet radiation cutting agents, the ultraviolet radiation cutting polymers have outstanding heat-resisting property, therefore leading to prevention of thermal decomposition in the film-formation process, and to improvement in yield of the ultraviolet radiation cutting polymers. Therefore, the ultraviolet radiation cutting polymers may be made to be included in a single layered polyester film in use of the ultraviolet radiation cutting polymers.

Also in case of use of the ultraviolet radiation cutting polymers, the ultraviolet radiation cutting polymers may be made to be included in all or in partial (preferably in all) internal layers as in use of the lower molecular weight ultraviolet radiation cutting agents. Inclusion of the ultraviolet radiation cutting polymers in the internal layers may improve yield of the ultraviolet radiation cutting polymers, and even when the ultraviolet radiation cutting polymers have having sublimability, ultraviolet radiation cutting property of the film may subsequently be improved, leading to prevention of pollution of manufacturing facilities.

As the ultraviolet radiation cutting polymers, commonly used various ultraviolet radiation cutting polymers may be used. Preferable ultraviolet radiation cutting polymers include polymers obtained from monomers having ultraviolet absorption property (naphthal imide compounds etc.) For example, there may be used copolyesters including naphthalene dicarboxylic acids and naphthal imido compound represented with following formula (4) "Novapex (registered trademark) U110", manufactured by Mitsubishi Chemical, Inc. etc. as acid components.

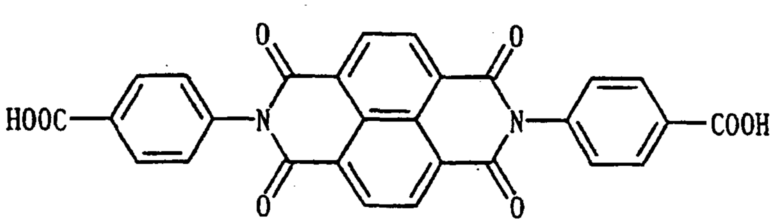

(4)

(3) Use of inorganic ultraviolet radiation cutting agents

Inorganic ultraviolet radiation cutting agents can cut ultraviolet radiation by cutting off the ultraviolet radiation. These cutting agents have excellent heat-resisting property, and may give improved yield in a film-formation process, resulting in easier improvement of ultraviolet radiation cutting property of films. However, since the inorganic ultraviolet radiation cutting agents have refractive indexes different from refractive indexes of polyester films to visible light, unlike the organic ultraviolet radiation cutting agents (lower molecular ultraviolet radiation cutting agents, ultraviolet radiation cutting polymers, etc.), they may have a possibility of reducing natural light transmittance. Then, in use of the inorganic ultraviolet radiation cutting agents, used are micro-particle-shaped cutting agents having a mean particle diameter smaller than wavelengths of visible light. Use of the inorganic micro-particle-shaped ultraviolet radiation cutting agents can cut off ultraviolet radiation, without reducing the natural light transmittance. A mean particle diameter of the inorganic ultraviolet radiation cutting agents is, for example, not more than 100 nm, preferably not more than 70 nm, and more preferably not more than 40 nm. A mean particle diameter of the inorganic ultraviolet radiation cutting agents is usually not less than 10 nm.

Also in use of the inorganic ultraviolet radiation cutting agents, the ultraviolet radiation cutting agents may be included in all or in partial internal layer (preferably in all layers) as in use of the lower molecule ultraviolet radiation cutting agents. Even in the case where the inorganic ultraviolet radiation cutting agents have sublimability, inclusion in internal layers of the ultraviolet radiation cutting agent can improve yield of the ultraviolet radiation cutting agents, and can improve the ultraviolet radiation cutting property of the film.

As the inorganic ultraviolet radiation cutting agents, titanium ultraviolet radiation cutting agents (titanium dioxide etc.) etc. may be mentioned.

Maximum value of heat shrinkage stress

A heat shrinkage stress in the maximum shrinkage direction of the heat-shrinkable polyester film of the present invention after having experienced heat shrink by 10% in the maximum shrinkage direction preferably gives not less than 7 MPa. The value is measured under following conditions: hot-air (90˚C, at a rate of 5 m/s); specimen width 20 mm; and distance between corresponding chucks 100 mm. Films having the maximum value of heat shrinkage stress of not less than 7 MPa can give heat-shrinkable labels having more excellent reinforcing effect of wrapped containers. That is, heat-shrinkable labels obtained from the film having the maximum value of heat shrinkage stress less than the above-mentioned range show a tendency of giving poor reinforcing effect of the wrapped containers. The maximum value of heat shrinkage stress is preferably not less than 10 MPa, and more preferably not less than 11 MPa.

The maximum value of heat shrinkage stress is measured by following methods.

[1] From a heat-shrinkable polyester film, a specimen having 200 mm in length in a maximum shrinkage direction, and 20 mm in width is cut out.

[2] Inside of a hot-air oven of a tensile testing machine (for example, "Tensilon" manufactured by Toyoseiki) provided with a hot-air oven is heated up to 90˚C.

[3] Supply of hot-air therein is terminated and the specimen is set in the oven. A distance between corresponding chucks is set as 100 mm (constant). The specimen is loosened to give a ratio between a length of the specimen between chucks and a distance between chucks of (length of the specimen between chucks): (distance between chucks) = 1 : 0.9.

[4] The door of the oven is immediately closed and supply of hot-air (90˚C, at a rate of 5 m/s) is resumed. The specimen is heat shrunk by 10%, and a heat shrinkage stress after shrinking is detected and measured.

[5] A maximum value obtained from a resulting chart of the heat shrinkage stress is regarded as a maximum value of the heat shrinkage stress (MPa).

Thickness distribution

The heat-shrinkable polyester film of the present invention preferably has a uniform thickness. When a thickness distribution (variation of thickness) in a maximum shrinkage direction of the film is measured for specimens with 50 cm in length, and 5 cm in width, the heat-shrinkable polyester film of the present invention preferably has not more than 6% of thickness distribution represented with following equation.

$$\text{Thickness distribution} = [(\text{maximum thickness} - \text{minimum thickness}) / (\text{average thickness})] \times 100$$

The thickness distribution may be obtained in such a method that: 10 specimens, measuring 50 cm in length and 5 cm in width, having a length in a maximum shrinkage direction are prepared; a thickness in a longitudinal direction is continuously measured for each specimen using a contact type thickness gage (for example, "KG60/A" by ANRITSU CORP.) to output to a chart; a maximum thickness, a minimum thickness, and an average thickness are determined from the output; a thickness distribution is calculated using the above-described equation; and an average of the thickness distributions of ten specimens is determined.

Films having the thickness distribution exceeding 6% reduce printing property especially in printing multicolor patterns, and easily give color displacement in superposition of a plurality of colors in printing processes. In addition, the film makes superposition of adhesion portion of the film difficult in processing of tubing by solvent adhesion for producing labels from the film of the present invention. Furthermore, when rolling into a shape of a roll in a film manufacturing process, the film having the thickness distribution exceeding 6% induces partial difference of rolling hardness, and further gives slack and crinkling of film induced by the partial difference, possibly disabling use of the film as a heat-shrinkable film. The thickness distribution is more preferably not more than 5%, and especially preferably not more than 4%.

Melting specific resistance

The heat-shrinkable polyester film of the present invention preferably has a melting specific resistance at 275°C of not less than $0.70 \times 10^8$ Ω• cm. In cooling, by a casting roll, of a film melt extruded from an extruder, a smaller melting specific resistance can improve the electrostatic attraction of the film to the roll, and thereby stability of cooling solidification may be improved, leading to improvement of casting velocity (production speed). The melting specific resistance is more preferably not more than $0.65 \times 10^8$ Ω· cm, and still more preferably not more than $0.60 \times 10^8$ Ω · cm.

In addition, a lower melting specific resistance and higher electrostatic attraction can also improve film quality. In detail, lower electrostatic attraction gives unsatisfactory cooling solidification of the film, the film possibly locally entraps air between casting rolls and the film to form pinner bubbles (stripe-shaped defect) on a film surface. However, excellent electrostatic attraction can reduce occurrence of the pinner bubbles, and can give satisfactorily film visual appearance.

In addition, the melting specific resistance low enough and the electrostatic attraction high enough can give a uniform thickness of the film. In detail, lower electrostatic attraction to casting rolls provide uneven thickness of a cast undrawn film, and a drawn film obtained by drawing of the undrawn film has larger un-uniformity of thickness. However, electrostatic attraction high enough can give a uniform thickness to the drawn film also.

In order to control the melting specific resistance of the film in the above-mentioned range, desirable is inclusion of alkaline earth metal compounds and phosphorus including compounds in the film. Although only the alkaline earth metal compounds can reduce the melting specific resistance, coexistence of phosphorus including compounds can remarkably reduce the melting specific resistance. Reasons for combination of alkaline earth metal compounds and phosphorus including compounds being able to remarkably reduce the melting specific resistance is not clear, but it is probably because that inclusion of the phosphorus including compounds can decrease an amount of foreign matters, and can increase an amount of electric charge carriers.

A content of the alkaline earth metal compounds in the film is preferably not less than 40 ppm (based on mass, and so on), for example on the basis of alkaline earth metal atom $M^2$, more preferably not less than 50 ppm, and still more preferably not less than 60 ppm. Excessively smaller amount of alkaline earth metal compounds represents tendency of making drop of the melting specific resistance difficult. In addition, excessively large amount of content of the alkaline earth metal compounds saturates reduction effect by the melting specific resistance, and rather represents tendency for increasing harmful effects, such as foreign matter formation and coloring. Therefore, the content of the alkaline earth metal compounds is preferably not more than 400 ppm on the basis of the alkaline earth metal atom $M^2$, more preferably not more than 350 ppm, and still more preferably not more than 300 ppm.

A content of the phosphorus including compounds in the film is, for example, preferably not less than 10 ppm (based on mass, and so on) on the basis of phosphorus atom P, more preferably not less than 15 ppm, and still more preferably not less than 20 ppm. An excessively small amount of phosphorus including compounds may make it difficult to fully reduce melting specific resistance, and may not reduce formed amount of foreign matters. In addition, excessively great amount of content of the phosphorus including compounds will also saturate reduction effect of the melting specific resistance. Furthermore, since formation of diethylene glycol is accelerated and moreover control of the formed amount is difficult, desired film properties may possibly not be obtained. Therefore, a content of the phosphorus including

compounds is, for example, preferably not more than 500 ppm on the basis of phosphorus atom P, more preferably not more than 450 ppm, and still more preferably not more than 400 ppm.

When reducing the melting specific resistance of the film using the alkaline earth metal compounds and the phosphorus including compounds, a mass ratio ($M^2$/P) of the alkaline earth metal atom $M^2$ and the phosphorus atom P in the film is preferably not less than 1. 5 (more preferably not less than 1. 6, and still more preferably not less than 1.7). The melting specific resistance may remarkably be reduced by the mass ratio ($M^2$/P) of not less than 1.5. In addition, the mass ratio ($M^2$/P) exceeding 5.0 may increase formed amount of foreign matters, or may cause coloring of the film. Therefore, the mass ratio ($M^2$/P) is preferably not more than 5.0, more preferably not more than 4.5, and still more preferably not more than 4.0.

The alkaline earth metal compounds include: hydroxides, alkoxides, salts with aliphatic carboxylic acids (such as acetate and butyrate, preferably acetates), salts with aromatic carboxylic acids (benzoate), salts with compounds having phenolic hydroxyl group etc. (salts with phenol etc.) of alkaline earth metals. Alkaline earth metals include: magnesium, calcium, strontium, barium (preferably magnesium), etc. Preferable alkaline earth metal compounds include: magnesium hydroxide, magnesium methoxide, magnesium acetate, calcium acetate, strontium acetate, barium acetate, etc., and especially magnesium acetate. The alkaline earth metal compounds may independently be used, or two or more kinds may be used in combination.

The phosphorus including compounds include: phosphoric acids (phosphoric acid, phosphorous acid, hypophosphorous acid, etc.) and esters thereof (alkyl esters, aryl esters, etc.); and alkyl phosphonic acids, aryl phosphonic acids, and esters thereof (alkyl esters, aryl esters, etc.). Preferable phosphorus compounds include: phosphoric acid, aliphatic esters of phosphoric acid (such as alkyl esters of phosphoric acid; for example, phosphoric acid mono $C_1$ to $C_6$ alkyl esters, such as phosphoric acid monomethyl ester, phosphoric acid monoethyl ester, phosphoric acid monobutyl ester; phosphoric acid di $C_1$ to $C_6$ alkyl esters, such as phosphoric acid dimethyl ester, phosphoric acid diethyl ester, phosphoric acid dibutyl ester etc. ; phosphoric acid tri $C_1$ to $C_6$ alkyl esters etc. , such as phosphoric acid trimethyl ester, phosphoric acid triethyl ester, phosphoric acid tributyl ester, phosphoric acid tributyl ester); aromatic esters of phosphoric acid (phosphoric acid mono-, di- or tri $C_6$ to $C_9$ aryl esters of phosphoric acid etc., such as triphenyl phosphate, tricresyl phosphate) ; aliphatic esters of phosphorous acid (alkyl esters of phosphorous acid, for example, mono-, di- or tri $C_1$ to $C_6$ alkyl esters of phosphorous acid, such as trimethyl phosphite, tributyl phosphite etc.) ; alkyl phosphononates ($C_1$ to $C_6$ alkyl phosphonates, such as methylphosphonate, ethylphosphonate); alkyl phosphonic acid alkyl ester (mono- or di $C_1$ to $C_6$ alkyl ester of $C_1$ to $C_6$ alkyl phosphonic acids, such as dimethyl methylphosphonate, dimethyl ethylphosphonate); aryl phosphonic acid alkyl ester (mono- or di $C_1$ to $C_6$ alkyl ester of $C_6$ to $C_9$ aryl phosphonic acids, such as dimethyl phenylphosphonate, diethyl phenylphosphonate); aryl phosphonic acid aryl esters (mono- or di $C_6$ to $C_9$ aryl esters of $C_6$ to $C_9$ aryl phosphonic acids such as diphenyl phenylphosphonate) etc. Especially preferable phosphorus including compounds include phosphoric acid and trialkyl phosphate (trimethyl phosphate etc.). These phosphorus including compounds may independently be used, or two or more kinds may be used in combination.

In order to further reduce the melting specific resistance of the film, inclusion of alkali metal compounds in the film is desirable, in addition to the alkaline earth metal compounds and the phosphorus including compounds. Although independent inclusion in the film of the alkali metal compounds cannot reduce the melting specific resistance, addition of the alkali metal compounds into a coexistence system of the alkaline earth metal compounds and the phosphorus including compounds can remarkably reduce the melting specific resistance. Although the reason is not yet clear, it is estimated that formation of a complex with three members of the alkali metal compounds, the alkaline earth metal compounds, and the phosphorus including compounds may reduce the melting specific resistance.

A content of the alkali metal compound in the film is, for example, preferably not less than 0 ppm (based on mass, and so on), more preferably not less than 5 ppm, still more preferably not less than 6 ppm, and especially preferably not less than 7 ppm, based on alkali metal atom $M^1$. In addition, an excessive content of the alkali metal compounds saturates reduction effect of the melting specific resistance, and also increases an amount of a formed amount of a foreign matter. Therefore, the content of the alkali metal compounds is, for example, preferably not more than 100 ppm, more preferably not more than 90 ppm, and still more preferably not more than 80 ppm, based on the alkali metal atom $M^1$.

The alkali metal compounds include hydroxides, carbonates, aliphatic carboxylic acid salts (acetates and butyrates, preferably acetates), aromatic carboxylic acid salts (benzoates), and salts with compounds having phenolic hydroxyl group (salts with phenol etc.) of alkali metals etc. Alkali metals include lithium, sodium, potassium, etc. (preferably sodium). Preferable alkaline earth metal compounds include lithium hydroxide, sodium hydroxide, potassium hydroxide, lithium carbonate, sodium carbonate, potassium carbonate, lithium acetate, sodium acetate, potassium acetate, etc., especially sodium acetate.

Addition timing of the alkaline earth metal compounds and the phosphorus including compounds (and if necessary the alkali metal compounds) is not especially limited. Addition may be carried out in any stage, for example, before esterification reaction at the time of polyester polymerization, during esterification, between termination of esterification and polymerization process beginning, during polymerization, and after polymerization. The timing is preferably at any stage after esterification process, and it is more preferably between termination of esterification and polymerization

process beginning. Addition of the alkaline earth metal compounds and the phosphorus including compounds (and if necessary the alkali metal compounds) after esterification process may reduce more foreign matter as compared to addition before esterification.

Composition of polyester

A heat-shrinkable polyester film of the present invention has an ester unit formed from a polybasic carboxylic acid component and a polyhydric alcohol component as a principal constitutional unit. Polybasic carboxylic acids for forming polybasic carboxylic acid components in the ester unit include aromatic dicarboxylic acids such as terephthalic acid, isophthalic acid, naphthalene dicarboxylic acid, ortho-phthalic acid etc.; aliphatic dicarboxylic acids, such as adipic acid, azelaic acid, sebacic acid, decanedicarboxylic acid etc.; alicyclic dicarboxylic acids etc.; and ester formation derivatives etc.

In use of the above-described aliphatic dicarboxylic acids, the aliphatic dicarboxylic acid component is preferably less than 3 mole % in a polybasic carboxylic acid component 100 mole % of the film. Although described later for details, the heat-shrinkable polyester film of the present invention preferably has an ethylene terephthalate unit as a principal constitutional unit, in order to demonstrate tear resistance, strength, heat-resisting property, etc. Accordingly, terephthalic acid of the polybasic carboxylic acid component in the film is preferably a principal component. However, a heat-shrinkable label obtained from films having an amount of the aliphatic dicarboxylic acid components of not less than 3 mole % may undesirably not provide rigidity (stiffness of the film) for withstanding to high-speed wrapping on containers.

In addition, preferably polybasic carboxylic acids (for example, trimellitic acid, pyromellitic acid, anhydrides thereof, etc.) with not less than tribasic are not used. Sufficient heat shrinkage percentage may not be obtained with heat-shrinkable polyester films having these polybasic carboxylic acid components.

Ethylene glycol is used as an polyhydric alcohol for forming polyhydric alcohol component in ester unit in order to form ethylene terephthalate unit. In addition to the previously described materials, aliphatic diols, such as propylene glycol, 1,4-butanediol, 1,6-hexandiol, 3-methyl-1,5-pentanediol, neopentyl glycol, 2-methyl-1,5-pentanediol, 2,2-diethyl-1,3-propanediol etc. alicyclicdiols, such as 1,4-cyclohexane dimethanol, dimerdiols, bisphenol compounds or alkylene oxide addition products of derivatives thereof may also be used in combination.

For films of the present invention, preferably used are polyesters adjusted to have a glass transition temperature (Tg) of 60˚C to 75˚C, using one or more kinds of diols of carbon number of 3 to 6 (for example, propylene glycol, 1,4-butanediol, neopentyl glycol, 1,6-hexandiol, etc.) and 1,4-cyclohexane dimethanol.

Especially, for securement of each of the heat shrinkage percentages, improvement in shrinking finished visual appearance, and securement of container reinforcing effect, polyesters obtained by use in combination of neopentyl glycol are preferably used. In a polyhydric alcohol components 100 mole % of the film, an amount of neopentyl glycol component is preferably 15 or more mole %, preferably not less than 18 mole %, and not more than 27 mole %, preferably not more than 25 mole %. In addition, when diols of carbon number of 3 to 6 other than neopentyl glycol are used, in polyhydric alcohol components 100 mole % of the film, these diol components are not less than 3 mole % and preferably not less than 5 mole %, and not more than 15 mole % and preferably not more than 13 mole %. In addition, in the case where 1,4-cyclohexane dimethanol is used, an amount of 1,4-cyclohexane dimethanol component in polyhydric alcohol components 100 mole % of the film are not less than 15 mole % and preferably not less than 18 mole %, and not more than 27 mole % and preferably not more than 25 mole %.

Diols (for example, octanediol etc.) with not less than 8 of carbon numbers excluding preferable polyhydric alcohols described above, and polyhydric alcohols not less than trihydric are not preferably used. Sufficient heat shrinkage percentage may in some case be difficult to be realized by heat-shrinkable polyester films having these diol components or polyhydric alcohol components.

In addition, although it is not polyhydric alcohols, lactones represented by ε-caprolactone may partially be used. Lactone rings open to form units having ester bonds at both ends.

In consideration of tear resistance, strength, and heat-resisting property of the film, ethylene terephthalate unit is preferably not less than 50 mole % in constitutional units 100 mole % of the heat-shrinkable polyester film. Therefore, the terephthalic acid component (component comprising terephthalic acid or esters thereof) is preferably not less than 50 mole % in the polybasic carboxylic acid components 100 mole %, and the ethylene glycol component is preferably not less than 50 mole % in the polyhydric alcohol components 100 mole %. The ethylene terephthalate unit is more preferably not less than 55 mole %, and still more preferably not less than 60 mole %.

Manufacturing method of polyester

Polyesters constituting the heat-shrinkable polyester film may be produced by conventional melt polymerization methods, and the methods include what is called a direct polymerization method, such as polycondensation of oligomers obtained by direct reaction of polybasic carboxylic acids and polyhydric alcohols; and what is called an ester interchange

method, such as polycondensation after ester interchange reaction of methyl esters of polybasic carboxylic acids and polyhydric alcohols etc. In addition, polyesters obtained by other polymerization methods may also be used. A degree of polymerization of the polyesters preferably gives an intrinsic viscosity of 0.3 dl/g to 1.3 dl/g.

Conventional various catalysts may be used as polymerization catalysts, and, for example, usable catalysts include: titanium catalysts, antimony catalysts, germanium catalysts, tin catalysts, cobalt catalysts, manganese catalysts, etc., preferably titanium catalysts (titanium tetrabutoxide etc.), antimony catalysts (antimony trioxide etc.), germanium catalysts (germanium dioxide etc.), cobalt catalysts (cobalt acetate etc.) etc.

In addition, antioxidants, UV stabilizers, antistatic agents, colorants, antibacterial agents, etc. may be added in raw material of the film , if necessary.

Polyester films may be obtained by publicly known methods described later. Methods to make a plurality of components contained in the heat-shrinkable polyester film include a method of independent use of copolyester by means of copolymerization, and blending of different kinds of homopolyesters and/or copolyesters.

In a method of independent use of copolyester, there may be used copolymerized polyesters obtained from polyhydric alcohols with predetermined compositions, and polybasic carboxylic acids with predetermined compositions. On the other hand, a method of blending of polyester with different compositions may preferably be used, because properties of films can be easily changed only by changing blend ratios, and it may also industrially produce films of various kinds, this method is preferably employable.

In the blending method, in detail, it is preferable to blend and use two or more kinds of polyesters having different Tg. Three or more kinds of polyesters may also be blended.

In use of blend of two or more kinds of polyesters, for example, there may possibly occur such troubles that polyesters fail to exhibit compatibility to lead to whitening of resulting films. However, experience reveals that in a film extrusion process described later, usually heating causes an ester interchange reaction to convert polyesters included in the film into copolymerized polyesters, resulting in avoidance of troubles, such as whitening. Copolymer formation by such an ester interchange reaction can be identified in such a way that, for example, single Tg is usually given by publicly known method films obtained from two or more kinds of polyester blends having different Tg.

Manufacturing method of heat-shrinkable polyester film

In detailed manufacturing method of a film, raw material polyester chips are dried using a dryer, such as hopper dryer and paddle dryer, or vacuum dryer, and are extruded into a shape of a film at temperatures of 200˚C to 300˚C using an extruder. Alternatively, undried polyester raw material chips are extruded into a shape of a film, while removing moisture within a vent type extruder. In extrusion, conventional methods, such as a T-die method, a tubular method, etc. are employable. After extrusion, the film obtained is immediately cooled to obtain an undrawn film. Undrawn film, as used herein, also include films having experienced application of a tension needed for film delivery in manufacturing process.

A film of the present invention may be of single layer, and may be of a laminated film obtained by laminating 2 or more of layers (for example, two-layered, three-layered, four-layered film, etc.) In the case of a laminated film, each layer may be made of a polyester having a same composition, and polyesters with different compositions are preferably used for every layer. In addition, in case of three-layered film, may be suitably used a configuration of using a polyester with identical composition for both outer layers, and a polyester with different composition in a central layer. A laminating method in case of adoption of such a laminated film is not especially limited, and for example, methods of obtaining the undrawn film by publicly known co-extruding methods etc. are employable.

In addition, as mentioned above, for equalization of a thickness distribution of the film, recommended is application of voltage between an electrode and casting rolls by disposing electrodes between the extruder and the casting rolls to electro-statically attract the film onto the rolls.

Then, drawing processing is given to the undrawn film. After cooling by the casting rolls etc., drawing processing may succeedingly be performed, and the undrawn film is once wound up in a shape of a roll after cooling, and then drawing processing may be performed. Since it is practical on manufacturing efficiency that a maximum shrinkage direction is a transverse (width) direction of the film, hereinafter, represented will be example of a method of drawing in case of a maximum shrinkage direction being a transverse direction. But it is also possible to draw the undrawn film to give a film having the maximum shrinkage direction identical with the longitudinal (lengthwise) direction of the film, according to common methods, for example, by changing the drawing direction for an angle of 90˚.

In respect to equalization of the thickness distribution of the heat-shrinkable polyester film, and to realization of the value not more than the upper limit value, the film is preferably heated in a preheating process prior to the film being drawn in the transverse direction, for example, in a tenter in the drawing process. In this preheating process, a lower hot-air velocity is used so that a thermal conductance gives a value of not more than 0.00544 J/cm$^2$•sec•˚C (0.0013 calory /cm$^2$ sec · ˚C), heating is preferably performed until the film surface temperature gives a certain temperature within a limit of Tg + 0˚C to Tg + 60˚C.

Drawing in the transverse direction is performed at predetermined temperatures within a limit of Tg - 5˚C to Tg + 15˚C. In the film of the present invention, the drawing is performed in two stages in order that the heat shrinkage percentage of (A) and (B), and the heat shrinkage percentage difference Δ may give values in the above-mentioned ranges, and furthermore in order that the maximum value of heat shrinkage stress may give the value in the above-mentioned range. According to the invention the drawing is performed in two stages.

First, a first stage of drawing is performed. A drawing ratio is not less than 4.4 times and not more than 6.0 times with respect to an undrawn film, and preferably not less than 4.8 times and not more than 5.5. Drawing temperatures in the first stage is determined as described above (predetermined temperatures within the range of Tg - 5˚C to Tg + 15˚C).

Next, heat setting is preferably performed for the film in a state with a tension in drawing direction. Tensioning ratio in the case is not less than 1% and not more than 6% with respect to the film after the first stage of drawing, and preferably not less than 2% and not more than 5%. In addition, the heat setting temperature is preferably a same temperature as in the first stage of drawing, or the heat setting temperature is set about 1 to 5˚C lower than the first stage drawing temperature within the temperature range. The heat setting period is not less than 0.5 seconds and not more than 5 seconds, and preferably not less than 1 second and not more than 3 seconds.

Then, the second stage of drawing is performed. The drawing ratio is not less than 1.1 times and not more than 1.5 times (preferably not more than 1.3 times) with respect to the film after heat setting (after the first stage of drawing in case of no heat setting). The drawing temperature in the second stage is same as in the heat setting temperature, or is about 1 to 5˚C lower than the heat setting temperature within the temperature range.

Subsequently, the film is cooled preferably with concurrent application of a slight tension to obtain a heat-shrinkable polyester film. A tensioning ratio in cooling is preferably 0.1 to 3% with respect to the film after the second stage of drawing.

It is preferable to use equipment that can reduce a variation in the film surface temperature in the transverse drawing process as described above. That is, the drawing process has preheating process before drawing, drawing process, heat treatment process after drawing, relaxation treatment, re-drawing process, etc. Especially, in the preheating process, the drawing process, and the heat treatment process after drawing, a range of variation of surface temperatures of the film measured at an arbitrary point is preferably in a range of the average temperature ±1˚C, and preferably in a range of the average temperature ±0.5˚C. The reason is that a smaller range of variation of surface temperatures of the film may give drawing and heat treatment at same temperatures over the film full length, and may equalize shrink behavior, physical properties and the like.

The variation in the film surface temperatures can be reduced, for example, by use of a blower mounted with an inverter allowing strict control of supply of hot air to be used for heating of the film, or by use of an equipment enabling suppression of the variation in temperatures of hot air by low-pressure steam of not more than 500 kPa (not more than 5 $kgf/cm^2$) as a heat source.

In consideration of suppression of internal generation of heat of the film caused by drawing, and reduction of the film temperature variation in the transverse direction, a heat conductivity coefficient in the drawing process is preferably not less than 0.00377 $J/cm^2 \cdot sec \cdot$ ˚C (0.0009 $calory/cm^2 \cdot sec \cdot$˚C), and more preferably 0.00544 to 0.00837 $J/cm^2 \cdot sec \cdot$˚C (0.0013 to 0.0020 $calory/cm^2 \cdot sec \cdot$˚C).

The heat-shrinkable label obtained using the heat-shrinkable polyester film of the present invention may present excellent shrinking finished visual appearance also in usage (labels needs partially higher shrinkage percentage) of full labels, such as for PET bottles, furthermore leading to realization of higher shrinkage percentage in a shorter-time treatment. Furthermore, it also has reinforcing effects of containers, such as PET bottles that are wrapped and shrunk.

The heat-shrinkable label obtained using the heat-shrinkable polyester film wound into a roll of the present invention, may exhibit excellent heat shrinkage properties, and furthermore may provide a smaller variation to heat shrink behavior of each label, and realize an extremely smaller rate of incidence of defective products.

For obtaining a heat-shrinkable label using the heat-shrinkable polyester film preferably following procedures are used. For example, a heat-shrinkable film roll before shrinking is taken out after predetermined period of time storage in an environment of controlled temperature and humidity. A solvent for adhesion is applied, while the film is unwound film from the roll, with a specified width a little inside from one edge of one surface thereof by a conventionally known tubing machine, and immediately the film is folded so that the edges thereof are adhered to each other, thus yielding a tubular film. The tubular film obtained is flattened and wound into a roll, or cut into a predetermined length continuously after tubing processing to obtain a heat-shrinkable label.

A melt adhesion method of partially melting a film may be adopted as adhesion of the film, but use of solvent is preferable from a viewpoint of suppression, such as variation of the heat shrinkage properties of labels. Solvents suitably used include, for example, organic solvents such as: aromatic hydrocarbons, such as benzene, toluene, xylene, and trimethyl benzene; halogenated hydrocarbons, such as methylene chloride and chloroform; phenols, such as phenol; furans, such as tetrahydrofuran; oxolanes, such as 1,3-dioxolane; etc. Especially, 1,3-dioxolane is desirable for higher safety.

After wrapping onto containers, such as PET bottles, the heat-shrinkable label may be heat-shrunk with the

above-described publicly known heat shrink means (hot-air tunnels, steam tunnels, etc.)

In PET bottles wrapped and shrunk with the heat-shrinkable label of the present invention, even when the bottles have a weight about 30% smaller than conventional PET bottles, the bottles may be reinforced in such a level to enable handling in a same manner as in conventional PET bottles, for example, in transportation and selling. In this case, not less than 75% of a drum section surface area of the PET bottle is preferably covered with the label.

For example, in labels produced from the heat-shrinkable film of the present invention in following manners, a rate of change in a bottle diameter measured by a method mentioned later is preferably not more than 10%, and more preferably not more than 7%, enabling demonstration of excellent container reinforcing effect.

A film is coated with 1,3-dioxolane in a line with a 3 ± 1 mm width, a little inside from one edge of one surface thereof (coating amount: 3.0 ± 0.3 g/$m^2$), both edges of the film is folded to be adhered to each other, and then cut in a size of 14 cm in length, and 6.7 cm in diameter to obtain a cylindrical label. A round shape PET bottle having a volume of 500 mL with a mass of 20.5 g [21cm in height, and 6.5cm in diameter of a central part (drum section)] is filled with water 500 mL, and sealed. This bottle is wrapped with the cylindrical label, and is passed in a steam tunnel with a zone temperature of 85°C in 2.5 seconds to shrink the label. Onto a central part of a side face of the label-wrapped bottle thus obtained, 15 kg of load is applied in compression mode using "Strograph V10-C" made by ToyoSeiki. A diameter ($W_1$) of the bottle central part at this time is measured. A rate of change in a bottle diameter (%) is calculated according to a following equation.

$$\text{Rate of change in a bottle diameter}(\%) = 100 \times (W_1 - W_2) / W_2$$

Here, $W_2$ represents a diameter of the bottle central part before application of a load.

For example, when a label-wrapped bottle falls within a vending machine, since a label having the rate of change in a bottle diameter exceeding 10% disadvantageously tends to allow deformation of the container and may cause clogging.

Hereinafter, the present invention will be described in detail in reference to examples, these examples are not intended to limit the scope of the present invention, and modifications within the spirit and scope of the present invention are also included by the present invention. Physical properties of films obtained in examples are determined according to following methods.

(1) Heat shrinkage percentage

A film is cut into a square measuring 10 cm x 10 cm, and is immersed for 5 seconds in a no-load state in hot water with temperatures of following (A), (B), and (C) to be heat shrunk. The film is then immersed in water at 25°C ± 0. 5°C for 10 seconds, and withdrawn from the water. Lengths in lengthwise and transverse direction are measured to obtain the heat shrinkage percentage according to a following equation.

$$\text{Heat shrinkage percentage } (\%) = 100 \times (\text{length before shrinking} - \text{length after shrinking}) / (\text{length before shrinking})$$

Here,

(A): 75°C ± 0.5°C,
(B): 85°C ± 0.5°C,
(C): 95°C ± 0.5°C.

A direction giving a largest shrinkage percentage is defined as a maximum shrinkage direction.

(2) Heat shrinkage percentage difference

A gripping device having two chucks facing each other is prepared so as to enable gripping of only a pair of edge of a rectangular film. A heat-shrinkable polyester film is cut into a square or a rectangle in parallel with respect to the maximum shrinkage direction. The film after cut is fixed with the gripping device. Both ends orthogonal to the maximum

shrinkage direction of film are gripped with the chuck, and the film is loosened to give a ratio between a length of the film between the chucks and a distance between chucks of 1 : 0.9. Subsequently, the film fixed to the device is immersed in hot water at 95˚C ± 0.5˚C in a no-load state, for 5 seconds, and is heat shrink, and the film is immediately immersed in water at 25 ˚C ± 0.5 ˚C for 10 seconds in a no-load state, and then withdrawn out from the water. This film is withdrawn from the device, and water is removed to obtain a film having experienced 10% of heat shrink in the maximum shrinkage direction. Subsequently, this film is placed in air and under environment of not more than 25˚C in unstrained state, and subjected as immediately as possible to following process.

This film is cut into a square measuring 10 cm × 10 cm, immersed in hot water at 95˚C ± 0.5˚C for 5 seconds in a no-load state to experience heat shrink, and then immersed in water at 25˚C ± 0.5˚C for 10 seconds. The film is withdrawn from the water and lengths in lengthwise and transverse direction are measured to obtain heat shrinkage percentages in a maximum shrinkage direction $X_{10}$ according to the heat shrinkage percentage equation. Furthermore, a heat shrinkage percentage in a maximum shrinkage direction determined by the temperature condition of (C) of (1) is defined as $X_0$. From these values, a heat shrinkage percentage difference ΔX (%) is calculated according to a following equation.

$$\Delta X = X_0 - X_{10}$$

(3) Three-dimensional surface roughness SΔa, SRz

A surface of a sample film is probed with a needle along MD of the film. (measurement length: 1 mm, cutoff value: 0.25 mm) . A needle type three-dimensional roughness gauge (product of Kosaka Seisakusho "ET-30K") is used for probing. (Radius of needle: 2μm, load: 30 mg). A projections and depressions profile with a length of 1 mm obtained by this probing is divided into 500 points in a pitch of 2μm, and heights of each point are inputted to a three-dimensional roughness analysis device (product of Kosaka Seisakusho "AT-30K"). A same operation as described above is continuously performed in TD of the film 150 times at intervals of 2μm (that is, over 0.3mm in TD of the film). Calculation with the analysis device gives SΔa and SRz.

(4) Maximum value of heat shrinkage stress

The maximum value of heat shrinkage stress is measured using a tensile testing machine with a hot-air oven ("Tensilon" manufactured by Toyoseiki). From a film before heat shrinking, cut is a specimen with a length of 200 mm in the maximum shrinkage direction and a width of 20 mm. Air supply of the hot-air oven beforehand heated at 90˚C is terminated. A distance between corresponding chucks is set as 100 mm. The specimen is fixed to the chucks being loosened to give a ratio between a length of the specimen between chucks and a distance between chucks of 1 : 0.9. A door of the oven is closed immediately, and air supply is resumed (at a temperature of 90˚C and a air velocity of 5 m/second, hot air is delivered from 3 directions of back, left, and right.) A shrinking stress detected at this time is measured, and a maximum value of heat shrinkage stress (MPa) after 10% shrinking is determined from a measurement chart.

(5) Thickness distribution

Ten specimens, 50 cm in length and 5cm in width, having a maximum shrinkage direction of a film as a longitudinal direction are prepared. Each specimen is continuously measured for a thickness in a longitudinal direction using a contact type thickness gage, for example, "KG60/A" (by ANRITSU CORP. etc.) to output into a chart. A maximum thickness, a minimum thickness, and an average thickness are obtained from this output. After calculating a thickness distribution using a following equation from the above-described data, an average of thickness distribution of 10 specimens is determined to give a thickness distribution of film.

$$\text{Thickness distribution} = [(\text{maximum thickness} - \text{minimum thickness}) / \text{average thickness}] \times 100$$

(6) Melting specific resistance

A pair of electrode plates is inserted in a sample (film) molten at a temperature of 275˚C to apply a voltage of

120 V. An electric current in the case is measured, and a melting specific resistance Si (Ω·cm) is calculated by a following equation.

$$Si = (A / I) \times (V / io)$$

Here,

A: Area of electrode ($cm^2$),
I: Inter-electrode distance (cm),
V: Voltage (V),
io: Electric current (A)

(7) Quality after shrink-finishing

Three-color printing with green, gold, and white is performed to a film using inks manufactured by TOYO INK MFG. CO., LTD. The film is removed out after storage of 250 hours in an environment controlled at a temperature of 30°C ± 1°C, and 85% ± 2% of relative humidity. The film is coated with 1,3-dioxolane in a line with a 2 ± 1 mm width, a little inside from one edge of one surface thereof (coating amount: 3.0 ± 0.3 g/$m^2$), and immediately the film is folded to give a tube so that the edges thereof are adhered to each other. The tubular film is flattened and rewound into a roll. This tube is cut out to obtain a cylindrical label with 14 cm in height and 6.7cm in diameter. Round shaped PET bottles of 500 mL filled with water [21 cm in height, and central part (drum section) 6.5 cm in diameter] are wrapped with this label. The resultant label-wrapped PET bottles are moved through a steam tunnel manufactured by Fuji Astec Inc., (Type: SH-1500-L) under conditions of a staying period in the tunnel of 2.5 seconds and temperature of zone of 85°C. Thus, labels are shrunk (n = 20). Level of shrinking finish is visually inspected, and quality after shrink-finishing is evaluated in two stages.

Criteria;

○: both crinkling, jump, and insufficient shrinkage not observed,
×: Crinkling, jump, or insufficient shrinkage observed.

(8) Container reinforcing effect

Using a tube molding equipment, 1, 3-dioxolane is coated in a line of a 3 ± 1 mm width, a little inside from one edge of one surface of a film, (coating amount: 3.0± 0.3 g/m2) , and immediately the film is folded to make both edges superimposed and adhered to each other, yielding a tubular film. The tubular film is flattened and rewound into a roll. This tube is cut out to obtain a cylindrical label with 14 cm in height and 6.7cm in diameter. Round shaped PET bottles of 500 mL filled with water [21 cm in height, and central part (drum section) 6.5 cm in diameter] are wrapped with this label. The resultant label-wrapped PET bottles are moved through a steam tunnel manufactured by Fuji Astec Inc., (Type: SH-1500-L) under conditions of a staying period in the tunnel of 2.5 seconds and temperatures of zone of 85°C. Thus, labels are shrunk. Onto a central part of a side face of the label-wrapped bottle thus obtained, 15 kg of load is applied in compression mode using "Strograph V10-C" made by ToyoSeiki . A diameter ($W_1$) of the bottle central part at this time is measured. A rate of change in a bottle diameter (%) is calculated according to a following equation.

$$\text{Rate of change in a bottle diameter(\%)} = 100 \times (W_1 - W_2) / W_2$$

Here, $W_2$ represents a diameter of the bottle central part before application of a load.

(9) Blocking resistance

In a hot state immediately after examination, all label wrapped PET bottles obtained by the quality after shrink-finishing examination are sequentially boxed into a carton box (3 × 4 = 12 as one set) so that labels may contact. This

carton box is removed out after 24-hour storage in interior of a room controlled by 40˚C ± 1˚C. Level of blocking of labels is evaluated by three-stage.

Evaluation criterion;

○ : blocking not observed,
Δ: blocking observed, but when detached, no mark remains
×: blocking observed, and when detached, mark remains.
○ and Δ: passed.

(10) Transferring property and tear resistance of film

The film is slit into width: 100 mm and length: 100 m to give shape of a tape. After rolling up this tape into a roll, the tape is delivered out from this roll, extended on metal guide rolls located in a line at intervals of 0.2 m, and then connected to a wind-up roll. Subsequently, all of the tape is made to run by 100 m/minute in velocity, and wound up on the wind-up roll. An amount of abrasion mark and an amount of white powder of the tape deposited on a surface of the guide roll after transferring are visually observed to evaluate according to following criteria.

[Transferring property]

1: quite many abrasion marks,
2: many abrasion marks,
3: a little abrasion mark,
4: almost no abrasion marks, and
5: no abrasion mark,

[Tear resistance]

1: formation of very much white powder,
2: formation of much white powder,
3: formation of a little white powder,
4: almost no white powder,
5: no white powder.

Synthesis example 1

Into an esterification reaction vessel, introduced are dimethylterephthalate 100 mole % as polybasic carboxylic acid, and ethylene glycol 100 mole % as polyhydric alcohol with 2.2 times (molar ratio) with respect to the polybasic carboxylic acid. Also simultaneously, introduced are antimony trioxide 0.09 mole % with respect to the polybasic carboxylic acid as a catalyst, and magnesium acetate 4 hydrate at 81 ppm in terms of Mg atom with respect to a polyester formed. The system temperature was raised to 230˚C, with agitation to perform an ester interchange reaction at normal pressure for 120 minutes. Termination of ester interchange reaction was considered as a timing of a specified quantity of methanol distilled off. After termination of the ester interchange reaction, trimethyl phosphate was added so as to give 58 ppm in terms of P atom with respect to the polyester formed. The system temperature was raised to 280˚C, under reduced pressure over 85 minutes, to perform polycondensation reaction approximately for 40 minutes until melt viscosity gives 7000 poise, obtaining a polyester A.

Synthesis examples 2 to 7

In a same manner as in Synthesis example 1, polyesters B to G represented in Table 1 were synthesized. In Synthesis examples 2 and 3, polyesters B and C were obtained using antimony trioxide so that Sb atom might give 160 ppm with respect to the polyester as a polymerization catalyst. In addition, in Synthesis example 4, polyester D was

obtained using titanium tetrabutoxide so that Ti atoms give 90 ppm with respect to polyester as a polymerization catalyst. Furthermore, in Synthesis example 6, polyester F was obtained using cobalt acetate tetra hydrate so that Mg atom gives 20 ppm with respect to polyester as a polymerization catalyst, and furthermore using titanium tetrabutoxide so that Ti atoms may give 15 ppm with respect to polyester as a polymerization catalyst. In Synthesis example 7, polyester G was obtained using a same polymerization catalyst as in Synthesis example 1.

As a lubricant, silica having a mean particle diameter of 1.8μm (manufactured by Fuji Silysia Chemical LTD. "Sisilia 350"), silica having a mean particle diameter of 0.007μm, or silica having a mean particle diameter of 5.80μm were added by 0.7 mass % in polyester A or polyester E, respectively to obtain a master batch, and the master batch was to be added to films.

Production of polyester A or polyester E including the silica blended therein was performed in such a manner that the silica was dispersed into ethylene glycol in polymerization thereof. Incidentally, silica in each film excluding the below-mentioned film No.5 (experiment 5) was introduced with a silica blended polyester A, and the silica in the film No. 5 was introduced with the silica blended polyester E.

Table 1 shows polyesters A to G obtained in the Synthesis example 1 to 7. In Table 1,

DMT: dimethyl terephthalate,
DMN: dimethyl naphthalate,
EG: ethylene glycol,
NPG: neopentyl glycol,
BD: 1,4-butanediol,
CHDM: 1,4-cyclohexane dimethanol,
PPG: 1,3-propanediol.

Table 1

| Polyester | Preparation composition | | | | | | |
|---|---|---|---|---|---|---|---|
| | Dicarboxylic acids (mole %) | | Dihydric alcohols (mole %) | | | | |
| | DMT | DMN | EG | NPG | BD | CHDM | PPG |
| A | 100 | | 100 | - | - | - | - |
| B | 100 | | 70 | 30 | - | - | - |
| C | 100 | | 60 | 40 | - | - | - |
| D | 100 | | - | - | 100 | - | - |
| E | - | 100 | 100 | - | - | - | - |
| F | 100 | | 70 | - | - | 30 | - |
| G | 100 | | - | - | - | - | 100 |

Experimental result about heat-shrinkable polyester film Experiment 1

Each chip of polyester A, silica blended polyester A, polyester chip B and polyester D, each separately pre dried, respectively, were blended at percentages represented in Table 2, and then were melt extruded with a monoaxial extruder (with T die) at 280 ˚C, and subsequently cooled with casting rolls immediately to obtain an undrawn film having a thickness of 260μm. The undrawn film was drawn in a transverse direction (a film width direction) after preheating at 100 ˚C for 3 seconds with a tenter.

The film was drawn by 4.75 times first at 77 ˚C (a first stage), then was tensed by 3% at 77 ˚C with respect to the film width at the time of termination of the first stage for 5 seconds (heat setting), and subsequently, drawn at 75 ˚C by 1.1 times the film width at the time of termination of the heat setting (the second stage) . Subsequently, the film was cooled while applying 1% of tension to a film width after termination of drawing of the second stage, and a polyester film No.1 with a thickness of 50μm was obtained. Tables 4 and 5 represent evaluation results of the obtained film.

Experiments 2 to 7

Except for having changed mixing ratios of polyester chips, as represented in Table 2, undrawn films with a thickness of 260 μm were obtained in a same manner as in experiment 1. The films were dawn in a same manner as

in experiment 1 except for conditions represented in Table 3, and polyester films No.2 to 7 having a thickness of 50 μm were obtained. Tables 4 and 5 represent evaluation results of each obtained film.

Experiment 8

Produced was a laminated polyester film No. 8 having three layers comprising both outer layers and a central layer. In the central layer of this laminated polyester film, each separately pre dried chip of polyester A, polyester C, and polyester D, respectively, was used to be blended at percentages represented in Table 2. In addition, in both outer layers, each separately pre dried chip of polyester A, silica blended polyester A, and polyester F, respectively, was used to be blended at percentages represented in Table 2. These mixed polyester chips were co-extruded at 280˚C using a monoaxial extruder having a T die, and then cooled with casting rolls immediately. Thus, obtained was an undrawn film with three-layered structure having both outer layers having a thickness of 65 μm and the central layer having a thickness of 130 μm, respectively. This undrawn film was drawn in a same manner as in experiment 1 except for having changed into conditions represented in Table 3, and a polyester films No.8 a thickness of 50 μm was obtained (both outer layers with a thickness of 12.5 um, respectively, and the central layer with a thickness of 25 μm.) Tables 4 and 5 represent evaluation result of obtained films.

Experiments 9 to 11

Except for having changed mixing ratios of polyester chips, as represented in Table 2, undrawn films having a thickness of 260 μm were obtained in a same manner as in Experiment 1. The undrawn films were drawn in a same manner as in experiment 1 except for having changed into conditions represented in Table 3 to obtain polyester films No.9 to 11 having a thickness of 50 μm. Tables 4 and 5 represent evaluation results of obtained films.

Table 2

| Film No. | Layer composition | | Polyester mixing composition (mass part) | | | | | | | Silica particle | |
|---|---|---|---|---|---|---|---|---|---|---|---|
| | | | A | B | C | D | E | F | G | Mean particle diameter (μm) | Amount of addition (mass %) |
| No.1 | Single | layer | 15 | 75 | - | 10 | - | - | - | 1.80 | 0.04 |
| No.2 | Single | layer | 10 | 80 | - | 10 | - | - | - | 1.80 | 0.04 |
| No.3 | Single | layer | 15 | 80 | - | 5 | - | - | - | 1.80 | 0.04 |
| No.4 | Single | layer | 15 | - | 75 | 10 | - | - | - | 1.80 | 0.04 |
| No.5 | Single | layer | - | - | - | 15 | 85 | - | - | 1.80 | 0.04 |
| No.6 | Single | layer | 15 | - | - | - | - | 85 | - | 1.80 | 0.06 |
| No.7 | Single | layer | 15 | - | 75 | - | - | - | 10 | 1.80 | 0.04 |
| No.8 | Three -layered | Central layer | 15 | - | 75 | 10 | - | - | - | - | - |
| | | Both outer layers | 15 | - | - | - | - | 85 | - | 1.80 | 0.04 |
| No.9 | Single | layer | 40 | - | 50 | 10 | - | - | - | 1.80 | 0.06 |
| No.10 | Single | layer | 15 | 75 | - | 10 | - | - | - | 0.007 | 1.00 |
| No.11 | Single | layer | 15 | 75 | - | 10 | - | - | - | 5.80 | 0.04 |

When silica is blended in a film or a layer constituting the film in Table 2, an amount of polyester A in Table 2 represents a total amount of the amount of the polyester A chips and the polyester A in the silica blended polyester A chip, and an amount of polyester E in Table 2 represents a total amount of the amount of the polyester E chips, and the polyester E in the silica blended polyester E chip. In addition, in the case of a single layer film, "silica particle" represents a content to the film whole quantity, and in the case of three-layered film, "silica particle" represents a content to each outermost layer whole quantity.

Table 3

| Film No. | Drawing conditions | | | | | | | |
|---|---|---|---|---|---|---|---|---|
| | First stage of drawing | | Heat setting | | | Second stage of drawing | | Tensioning ratio in cooling (%) |
| | Ratio (time) | Temperature (°C) | Tensioning ratio (%) | Temperature (°C) | Period (second) | Ratio (time) | Temperature (°C) | |
| No.1 | 4.75 | 77 | 3 | 77 | 5 | 1.1 | 75 | 1 |
| No.2 | 4.75 | 77 | 3 | 77 | 5 | 1.1 | 75 | 1 |
| No.3 | 4.75 | 80 | 3 | 80 | 5 | 1.1 | 78 | 1 |
| No.4 | 4.75 | 78 | 0 | - | - | 1.1 | 78 | 0 |
| No.5 | 4.75 | 95 | 3 | 75 | 5 | 1.1 | 75 | 1 |
| No.6 | 4.75 | 80 | 3 | 75 | 5 | 1.1 | 75 | 1 |
| No.7 | 4.75 | 77 | 3 | 77 | 5 | 1.1 | 75 | 1 |
| No.8 | 4.75 | 78 | 3 | 75 | 5 | 1.1 | 75 | 1 |
| No.9 | 4.75 | 84 | 0 | - | - | 1.1 | 77 | 0 |
| No.10 | 4.75 | 77 | 3 | 77 | 5 | 1.1 | 75 | 1 |
| No.11 | 4.75 | 77 | 3 | 77 | 5 | 1.1 | 75 | 1 |

In Table 3, a drawing ratio in the first stage of drawing represents a ratio to a film width, a tensioning ratio in heat setting represents a ratio to a film width after the first stage of drawing, a drawing ratio in the second stage of drawing represents a ratio to a film width after heat setting (after the first stage of drawing in case without heat setting), and a tensioning ratio in cooling represents a ratio to a film width after the second stage of drawing. In addition, in films No.4 and 9, the tensioning ratio "0%" in heat setting represents a case without heat setting process, and a tensioning ratio "0%" in cooling represents that the film was cooled without stress after the second stage of drawing.

Table 4

| Film No. | Heat shrinkage percentage (%) | | | Heat shrinkage percentage difference ΔX (%) | SΔa | SRz (μm) |
|---|---|---|---|---|---|---|
| | (A) | (B) | | | | |
| | | Maximum shrinkage direction | orthogonal direction | | | |
| No.1 | 50 | 78 | -1 | 10 | 0.012 | 0.74 |
| No.2 | 30 | 78 | -3 | 11 | 0.012 | 0.75 |
| No.3 | 43 | 78 | -3 | 11 | 0.011 | 0.74 |
| No.4 | 30 | 76 | -2 | 15 | 0.014 | 0.79 |
| No.5 | 15 | 76 | 2 | 15 | 0.013 | 0.77 |
| No.6 | 13 | 76 | -1 | 16 | 0.012 | 0.75 |
| No.7 | 42 | 77 | 1 | 11 | 0.012 | 0.77 |
| No.8 | 45 | 78 | 0 | 10 | 0.012 | 0.78 |
| No.9 | 20 | 70 | 1 | 30 | 0.017 | 0.88 |
| No.10 | 50 | 78 | -1 | 10 | 0.007 | 0.53 |
| No.11 | 50 | 78 | -1 | 10 | 0.037 | 1.65 |

Table 4 (continued)

| Film No. | Maximum value of heat shrinkage stress (MPa) | Quality after shrink-finishing | Thickness distribution (%) | Melting specific resistance (× $10^8$ Ω·cm) | Rate of change in a bottle diameter (%) |
|---|---|---|---|---|---|
| No.1 | 12 | ○ | 0.8 | 0.32 | 6.0 |
| No.2 | 12 | ○ | 0.9 | 0.27 | 6.1 |
| No.3 | 14 | ○ | 0.7 | 0.31 | 5.9 |
| No.4 | 8 | ○ | 1.3 | 0.32 | 6.7 |
| No.5 | 10 | ○ | 1.0 | 0.65 | 6.5 |
| No.6 | 14 | ○ | 0.9 | 0.31 | 5.9 |
| No.7 | 11 | ○ | 1.1 | 0.41 | 6.3 |
| No.8 | 12 | ○ | 1.0 | 0.32 | 6.0 |
| No.9 | 5 | × | 2.0 | 0.55 | 10.2 |
| No.10 | 12 | ○ | 0.8 | 0.32 | 6.0 |
| No.11 | 12 | ○ | 0.8 | 0.32 | 6.0 |

Table 5

| Film number | Blocking resistance | Transferring property | Tear resistance |
|---|---|---|---|
| No.1 | ○ | 4 | 5 |
| No.2 | ○ | 4 | 5 |
| No.3 | ○ | 4 | 5 |
| No.4 | ○ | 4 | 5 |
| No.5 | ○ | 4 | 5 |
| No.6 | ○ | 4 | 5 |
| No.7 | ○ | 4 | 5 |
| No.8 | ○ | 4 | 5 |
| No.9 | ○ | 4 | 5 |
| No.10 | × | 1 | 5 |
| No.11 | ○ | 5 | 1 |

Synthesis example 8 to 14

Polyesters A to G were synthesized in a same manner as in Synthesis example 1 except for not having blended silica in the polyester A and the polyester E. The polyesters have same compositions as that of the polyesters A to G of Table 1.

## Claims

**1.** A heat-shrinkable polyester film satisfying following requirements (A) to (E):

(A) a heat shrinkage percentage in a maximum shrinkage direction of a sample is 10% to 50%, wherein, the sample is prepared and treated under following conditions:

a heat-shrinkable polyester film is cut into a shape of a square measuring 10 cm × 10 cm;
the sample obtained is immersed in hot water at 70°C for 5 seconds and then withdrawn from the hot water, and subsequently is immersed in water at 25°C for 10 seconds, and then withdrawn from the water;

(B) a heat shrinkage percentage of a sample in a maximum shrinkage direction is not less than 75%, and a heat shrinkage percentage in a direction orthogonal to the maximum shrinkage direction is not more than 10%, wherein, the sample is prepared and treated under following conditions:

a heat-shrinkable polyester film is cut into a shape of a square measuring 10 cm × 10 cm;
the sample obtained is immersed in hot water at 85˚C for 5 seconds and then withdrawn from the hot water, and subsequently is immersed in water at 25˚C for 10 seconds, and then withdrawn from the water;

(C) a heat shrinkage percentage difference of a sample ΔX (%) represented by a following equation is 10% to 20%,

$$\Delta X = X_0 - X_{10}$$

wherein, $X_0$ and $X_{10}$ are defined as follows;
$X_0$: a heat shrinkage percentage in a maximum shrinkage direction of a sample obtained by cutting a heat-shrinkable polyester film into a shape of a square measuring 10 cm × 10 cm;
$X_{10}$: a heat shrinkage percentage in a maximum shrinkage direction of a film obtained by cutting a heat-shrinkable polyester film having experienced heat shrink by 10% in a maximum shrinkage direction; and
wherein, the sample obtained is immersed in hot water at 95˚C for 5 seconds and then withdrawn from the hot water, and subsequently is immersed in water at 25˚C for 10 seconds, and then withdrawn from the water;
(D) a three-dimensional surface roughness SΔa is 0.008 to 0.04;
(E) a three-dimensional surface roughness SRz is 0.6 to 1.5 μm, obtainable by

- a first stage of drawing at a drawing ratio between 4.4 times and 6.0 times with respect to the undrawn film, and at a drawing temperature within the range of Tg -5 ˚C to Tg +15 ˚C;
- heat setting of the film in a state of tension in the drawing direction at a tensioning ratio of not less than 1 % and not more than 6 % with respect to the film after the first stage of drawing, and at a temperature which is the same as in the first stage of drawing or 1 to 5 ˚C lower than the first stage drawing within the temperature range, for not less than 0.5 seconds and not more than 5 seconds;
- a second stage of drawing at a drawing ratio of not less than 1.1 times and not more than 1.5 times with respect to the film after heat setting at a temperature which is the same as the heat setting temperature or 1 to 5 ˚C lower than the heat setting temperature within the temperature range; and
- cooling the film.

2. The heat-shrinkable polyester film according to claim 1, wherein the polyester comprises ethylene terephthalate units.

3. The heat-shrinkable polyester film according to claim 2, wherein the polyester additionally comprises a polyhydric alcohol unit selected from propylene glycol, 1,4-butanediol, 1,6-hexanediol, neopentylglycol, 1,4-cyclohexane dimethanol, and combinations thereof.

4. The heat-shrinkable polyester film according to claim 2, wherein the polyester comprises not less than 50 mole % of ethylene terephthalate units in constitutional units 100 mole % of the heat-shrinkable polyester film.

5. The heat-shrinkable polyester film according to any one of claims 1 to 4, having a maximum of heat-shrinkage stress of not less than 7 MPa, as measured according to the specification.

## Patentansprüche

1. Wärmeschrumpfbare Polyesterfolie, die den folgenden Anforderungen (A) bis (E) genügt:

(A) die prozentuale Wärmeschrumpfung einer Probe in Richtung der maximalen Schrumpfung beträgt 10% bis 50%,
wobei die Probe unter den folgenden Bedingungen hergestellt und behandelt wird:

eine wärmeschrumpfbare Polyesterfolie wird in die Form eines Quadrats mit den Maßen 10 cm x 10 cm

geschnitten;
die erhaltene Probe wird 5 Sekunden lang in heißes Wasser von 70 ˚C eingetaucht und dann aus dem heißen Wasser herausgezogen und wird anschließend 10 Sekunden lang in Wasser von 25 ˚C eingetaucht und dann aus dem Wasser herausgezogen;

(B) die prozentuale Wärmeschrumpfung einer Probe in Richtung der maximalen Schrumpfung beträgt nicht weniger als 75%, und die prozentuale Wärmeschrumpfung in einer Richtung senkrecht zur Richtung der maximalen Schrumpfung beträgt nicht mehr als 10%,
wobei die Probe unter den folgenden Bedingungen hergestellt und behandelt wird:

eine wärmeschrumpfbare Polyesterfolie wird in die Form eines Quadrats mit den Maßen 10 cm x 10 cm geschnitten;
die erhaltene Probe wird 5 Sekunden lang in heißes Wasser von 85 ˚C eingetaucht und dann aus dem heißen Wasser herausgezogen und wird anschließend 10 Sekunden lang in Wasser von 25 ˚C eingetaucht und
dann aus dem Wasser herausgezogen;

(C) die Differenz der prozentualen Wärmeschrumpfung einer Probe ΔX (%), die durch die folgende Gleichung dargestellt wird, beträgt 10% bis 20%:

$$\Delta X = X_0 - X_{10},$$

wobei $X_0$ und $X_{10}$ wie folgt definiert sind:

$X_0$ ist die prozentuale Wärmeschrumpfung in Richtung der maximalen Schrumpfung einer Probe, die durch Schneiden einer wärmeschrumpfbaren Polyesterfolie in die Form eines Quadrats mit den Maßen 10 cm x 10 cm erhalten wird;
$X_{10}$ ist die prozentuale Wärmeschrumpfung in Richtung der maximalen Schrumpfung einer Folie, die durch Schneiden einer wärmeschrumpfbaren Polyesterfolie, die eine Wärmeschrumpfung um 10% in Richtung der maximalen Schrumpfung erfahren hat, erhalten wird; und
wobei die erhaltene Probe 5 Sekunden lang in heißes Wasser von 95 ˚C eingetaucht und dann aus dem heißen Wasser herausgezogen wird und anschließend 10 Sekunden lang in Wasser von 25 ˚C eingetaucht und dann aus dem Wasser herausgezogen wird;

(D) die dreidimensionale Oberflächenrauigkeit SΔa beträgt 0,008 bis 0,04;
(E) die dreidimensionale Oberflächenrauigkeit SRz beträgt 0,6 bis 1,5 μm;
erhältlich durch

- eine erste Stufe des Streckens in einem Streckverhältnis von 4,4 bis 6,0 in Bezug auf die unverstreckte Folie und bei einer Strecktemperatur im Bereich von Tg - 5 ˚C bis Tg + 15 ˚C;
- thermisches Fixieren der Folie in einem Zustand der Spannung in der Streckrichtung unter einem Spannverhältnis von nicht weniger als 1% und nicht mehr als 6% in Bezug auf die Folie nach der ersten Stufe des Streckens und bei einer Temperatur, die dieselbe wie in der ersten Stufe des Streckens ist oder um 1 bis 5 ˚C niedriger als in der ersten Stufe des Streckens innerhalb des Temperaturbereichs liegt, während nicht weniger als 0,5 Sekunden und nicht mehr als 5 Sekunden;
- eine zweite Stufe des Streckens in einem Streckverhältnis von nicht weniger als 1,1 und nicht mehr als 1,5 in Bezug auf die Folie nach dem thermischen Fixieren bei einer Temperatur, die dieselbe wie die Temperatur des thermischen Fixierens ist oder um 1 bis 5 ˚C niedriger als die Temperatur des thermischen Fixierens innerhalb des Temperaturbereichs liegt; und
- Abkühlen der Folie.

**2.** Wärmeschrumpfbare Polyesterfolie gemäß Anspruch 1, wobei der Polyester Ethylenterephthalat-Einheiten umfasst.

**3.** Wärmeschrumpfbare Polyesterfolie gemäß Anspruch 2, wobei der Polyester zusätzlich eine mehrwertige Alkoholeinheit umfasst, die aus Propylenglycol, 1,4-Butandiol, 1,6-Hexandiol, Neopentylglycol, 1,4-Cyclohexandimethanol und Kombinationen davon ausgewählt ist.

4. Wärmeschrumpfbare Polyesterfolie gemäß Anspruch 2, wobei der Polyester nicht weniger als 50 Mol-% Ethylenterephthalat-Einheiten umfasst, bezogen auf 100 Mol-% der Einheiten, die die wärmeschrumpfbare Polyesterfolie bilden.

5. Wärmeschrumpfbare Polyesterfolie gemäß einem der Ansprüche 1 bis 4, die eine gemäß der Spezifikation gemessene maximale Wärmeschrumpfspannung von nicht weniger als 7 MPa aufweist.

## Revendications

1. Film polyester thermorétractable satisfaisant les exigences (A) à (E) suivantes :

(A) le pourcentage de thermorétraction dans une direction de rétraction maximale d'un échantillon est de 10 % à 50 % ;
dans lequel l'échantillon est préparé et traité sous les conditions suivantes :

un film polyester thermorétractable est coupé en forme de carré mesurant 10 cm sur 10 cm ;
l'échantillon obtenu est immergé dans de l'eau chaude à 70 ˚C pendant 5 secondes et puis retiré de l'eau chaude et ensuite immergé dans de l'eau à 25 ˚C pendant 10 secondes et puis retiré de l'eau ;

(B) le pourcentage de thermorétraction d'un échantillon dans une direction de rétraction maximale est au moins 75 %, et le pourcentage de thermorétraction dans une direction perpendiculaire à la direction de rétraction maximale est au plus 10 % ;
dans lequel l'échantillon est préparé et traité sous les conditions suivantes :

un film polyester thermorétractable est coupé en forme de carré mesurant 10 cm sur 10 cm ;
l'échantillon obtenu est immergé dans de l'eau chaude à 85 ˚C pendant 5 secondes et puis retiré de l'eau chaude et ensuite immergé dans de l'eau à 25 ˚C pendant 10 secondes et puis retiré de l'eau ;

(C) la différence des pourcentages de thermorétraction d'un échantillon ΔX (%), représentée par l'équation suivante, est de 10 % à 20 % :

$$\Delta X = X_0 - X_{10}$$

dans lequel $X_0$ et $X_{10}$ sont définis comme suit :

$X_0$ est un pourcentage de thermorétraction dans une direction de rétraction maximale d'un échantillon obtenu par coupage d'un film polyester thermorétractable en forme de carré mesurant 10 cm sur 10 cm ;
$X_{10}$ est un pourcentage de thermorétraction dans une direction de rétraction maximale d'un film obtenu par coupage d'un film polyester thermorétractable ayant subi une thermorétraction par 10 % dans une direction de rétraction maximale ; et
dans lequel l'échantillon obtenu est immergé dans de l'eau chaude à 95 ˚C pendant 5 secondes et puis retiré de l'eau chaude et ensuite immergé dans de l'eau à 25 ˚C pendant 10 secondes et puis retiré de l'eau ;

(D) la rugosité de surface tridimensionnelle SΔa est de 0,008 à 0,04 ;
(E) la rugosité de surface tridimensionnelle SRz est de 0,6 à 1,5 μm ;
qui peut être obtenu par

- une première étape consistant à étirer à un rapport d'étirage de 4,4 à 6,0 par rapport au film non étiré et à une température d'étirage comprise dans la gamme de Tg - 5 ˚C à Tg + 15 ˚C ;
- thermofixage du film dans un état de tension dans la direction d'étirage à un rapport de tension d'au moins 1 % et d'au plus 6 % par rapport au film après la première étape d'étirage, et à une température qui est la même que celle de la première étape d'étirage ou inférieure de 1 à 5 ˚C à celle de la première étape d'étirage comprise dans la gamme de températures, pendant au moins 0,5 secondes et au plus 5 secondes ;
- une seconde étape d'étirage à un rapport d'étirage d'au moins 1,1 et au plus 1,5 par rapport au film après le thermofixage à une température qui est la même que la température du thermofixage ou inférieure de

1 à 5 ˚C à la température du thermofixage comprise dans la gamme de températures ; et
- refroidissement du film.

**2.** Film polyester thermorétractable selon la revendication 1, dans lequel le polyester comprend des motifs téréphtalate d'éthylène.

**3.** Film polyester thermorétractable selon la revendication 2, dans lequel le polyester comprend en outre un motif d'alcool polyhydrique choisi parmi le propylène glycol, le 1,4-butanediol, le 1,6-hexanediol, le néopentylglycol, le 1,4-cyclohexanediméthanol et des combinaisons de ceux-ci.

**4.** Film polyester thermorétractable selon la revendication 2, dans lequel le polyester comprend au moins 50 % molaire de motifs téréphtalate d'éthylène en motifs constitutionnels par rapport à 100 % molaire du film polyester thermorétractable.

**5.** Film polyester thermorétractable selon l'une quelconque des revendications 1 à 4, ayant une tension de thermorétraction maximale d'au moins 7 MPa, telle que mesurée selon la spécification.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03055937 A
- EP 1149685 A
- EP 1340609 A
- US 3388651 A
- JP 2002331581 A
- JP 2003165157 A
- WO 02087853 A
- WO 03091004 A
- JP 2004058383 A